(19) Europäisches Patentamt / European Patent Office / Office européen des brevets

(11) **EP 3 392 111 B1**

(12) **EUROPÄISCHE PATENTSCHRIFT**

(45) Veröffentlichungstag und Bekanntmachung des Hinweises auf die Patenterteilung:
**10.07.2024  Patentblatt 2024/28**

(21) Anmeldenummer: **18152094.1**

(22) Anmeldetag: **17.01.2018**

(51) Internationale Patentklassifikation (IPC):
**B60W 40/08** $^{(2012.01)}$

(52) Gemeinsame Patentklassifikation (CPC):
**B60W 40/08; B60K 35/10; G06V 20/597; G06V 40/19;** B60K 2360/149; B60W 2040/0818; B60W 2552/00; B60W 2554/00; B60W 2556/50

(54) **VERFAHREN UND VORRICHTUNG ZUM ERMITTELN EINER VISUELLEN ABLENKUNG EINES FAHRERS EINES FAHRZEUGS**

METHOD AND DEVICE FOR DETERMINING A VISUAL DEFLECTION OF A DRIVER OF A VEHICLE

PROCÉDÉ ET DISPOSITIF DE DÉTERMINATION D'UNE DISTRACTION VISUELLE D'UN CONDUCTEUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2017  DE 102017202194**

(43) Veröffentlichungstag der Anmeldung:
**24.10.2018  Patentblatt 2018/43**

(73) Patentinhaber: **Robert Bosch GmbH**
**70442 Stuttgart (DE)**

(72) Erfinder:
• Wulf, Felix
  **71636 Ludwigsburg (DE)**
• Bieg, Hans-Joachim
  **71093 Weil Im Schoenbuch (DE)**

(56) Entgegenhaltungen:
**EP-A1- 1 484 014     EP-A1- 1 961 622
EP-A1- 2 743 117     WO-A2-2011/088344
GB-A- 2 500 690**

EP 3 392 111 B1

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Es sind Systeme zur Erfassung einer visuellen Ablenkung eines Fahrers bekannt. Die visuelle Ablenkung kann hierbei beispielsweise abhängig von einem Blickwinkel oder einer Kopfpose des Fahrers ermittelt werden.

Das Dokument EP 1 484 014 A1 offenbart ein System und ein Verfahren zur Erfassung einer Ziel-Aufmerksamkeit.

Das Dokument WO 2011/088344 A2 offenbart einen Ansatz zur Kombinierung einer Sensierung einer Fahrers und einer Umgebung für ein Fahrzeugsicherheitssystem.

Das Dokument EP 1 961 622 A1 offenbart eine Sicherheits-Reise-Assistenz-Vorrichtung.

Das Dokument GB 2 500 690 A offenbart ein Fahrerassistenzsystem.

Das Dokument EP 2 743 117 A1 offenbart ein System und ein Verfahren zur Überwachung dun Reduktion von einer Fahrer-Einschränkung.

Offenbarung der Erfindung

Vor diesem Hintergrund werden mit dem hier vorgestellten Ansatz ein Verfahren zum Ermitteln einer visuellen Ablenkung eines Fahrers eines Fahrzeugs, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Ermitteln einer visuellen Ablenkung eines Fahrers eines Fahrzeugs vorgestellt, wobei das Verfahren folgende Schritte umfasst: Modellieren einer Aufmerksamkeit des Fahrers durch Bilden einer Aufmerksamkeitskarte unter Verwendung einer Fahrerinformation, die eine mittels eines Sensors des Fahrzeugs erfasste Blickrichtung und/oder Kopfhaltung des Fahrers und/oder eine Orientierung eines Oberkörpers des Fahrers repräsentiert, wobei die Aufmerksamkeitskarte eine von der Blickrichtung und/oder der Kopfhaltung abhängige Ist-Verteilung der Aufmerksamkeit des Fahrers in einem zweidimensionalen Koordinatensystem repräsentiert, wobei das zweidimensionale Koordinatensystem zumindest einen Teilbereich einer Umgebung des Fahrzeugs abbildet;

Modellieren eines Aufmerksamkeitsbedarfs durch Bilden einer Aufmerksamkeitsbedarfskarte, wobei die Aufmerksamkeitsbedarfskarte eine Soll-Verteilung der Aufmerksamkeit des Fahrers in dem zweidimensionalen Koordinatensystem repräsentiert; und

Vergleichen der Aufmerksamkeitskarte mit der Aufmerksamkeitsbedarfskarte, um einen die visuelle Ablenkung des Fahrers repräsentierenden Ablenkungswert zu ermitteln.

Unter einer visuellen Ablenkung kann eine Ablenkung des Fahrers durch bestimmte Objekte oder Ereignisse in einer Umgebung des Fahrzeugs verstanden werden, durch die beim Fahrer ein Aufmerksamkeitsdefizit entsteht. Unter einer Aufmerksamkeitskarte kann eine sogenannte Heatmap als Visualisierungstechnik für einen Ort der häufigsten Blickposition (d. h. diejenigen Positionen, an denen der Blick oft verweilt, werden als "heiß" bezeichnet) verstanden werden, durch die Richtungen der Aufmerksamkeit des Fahrers in eine zweidimensionale Abbildung transformierbar sind, beispielsweise in ein Kugelkoordinatensystem mit den Koordinaten Polarwinkel und Azimutwinkel. Die Aufmerksamkeitskarte kann beispielsweise mittels einer $m \times n$-Matrix beschreibbar sein. Ebenso kann auch unter einer Aufmerksamkeitsbedarfskarte analog zur Aufmerksamkeitskarte eine zweidimensionale Abbildung eines Aufmerksamkeitsbedarfs bezüglich der Umgebung des Fahrzeugs in dem Koordinatensystem verstanden werden. Beispielsweise kann die Aufmerksamkeitsbedarfskarte als eine Art Negativ zur Aufmerksamkeitskarte ausgebildet sein. Unter einer Aufmerksamkeitsbedarfskarte kann in diesem Sinne auch eine Coldmap zur Darstellung einer "negativen Hitze" (Kälte) verstanden werden.

Bei dem Sensor des Fahrzeugs kann es sich beispielsweise um einen Innenraumsensor des Fahrzeugs, etwa eine (Infrarot-) Kamera oder Ähnliches, handeln.

Der Ablenkungswert kann beispielsweise eine Differenz zwischen der Aufmerksamkeitskarte und der Aufmerksamkeitsbedarfskarte repräsentieren.

Der hier vorgestellte Ansatz beruht auf der Erkenntnis, dass eine unzulässige visuelle Ablenkung eines Fahrers eines Fahrzeugs, d. h. ein Aufmerksamkeitsdefizit, unter Verwendung von Heatmaps zur Modellierung eines Aufmerksamkeitszustands des Fahrers und eines Aufmerksamkeitsbedarfs detektiert werden kann. Ein solches Verfahren bietet je nach Ausführungsform folgende Vorteile.

Der Aufmerksamkeitsbedarf kann an tatsächliche Umgebungsbedingungen adaptiert werden.

Es ist möglich, eine Richtung, in der mehr Aufmerksamkeit erforderlich ist, zu bestimmen, statt lediglich zu bestimmen, ob grundsätzlich ungenügende Aufmerksamkeit vorliegt.

Es kann die periphere Wahrnehmung des Fahrers bei der Modellierung mit einbezogen werden.

Ferner kann beispielsweise das Wissen des Fahrers über Umgebungsobjekte in der Modellierung abgebildet werden. Dies ist insbesondere bei Zustandsänderungen relevant, etwa wenn ein voranfahrendes Fahrzeug abbremst.

Ein weiterer Vorteil besteht in der Möglichkeit, die zeitliche Dynamik des Vergessens visueller Eindrücke, etwa wenn der Fahrer die Blickrichtung wechselt, detailliert zu modellieren.

Der hier vorgestellte Ansatz gewährleistet somit eine sehr hohe Modularität und Variabilität.

Gemäß einer Ausführungsform kann im Schritt des Modellierens die Aufmerksamkeitskarte oder, zusätzlich oder alternativ, die Aufmerksamkeitsbedarfskarte auf der Basis eines Kugelkoordinatensystems gebildet werden. Dadurch wird eine sphärische und somit möglichst realitätsnahe Abbildung der Fahrzeugumgebung ermöglicht.

Von Vorteil ist auch, wenn im Schritt des Modellierens das Kugelkoordinatensystem einen Polarwinkelbereich zwischen minus 180 Grad und plus 180 Grad oder, zusätzlich oder alternativ, einen Azimutwinkelbereich zwischen minus 60 Grad und plus 60 Grad aufweist. Dadurch wird eine effiziente Nachbildung der Umgebung des Fahrzeugs mittels des Koordinatensystems ermöglicht.

Ferner ist es vorteilhaft, wenn im Schritt des Modellierens die Aufmerksamkeitskarte oder, zusätzlich oder alternativ, die Aufmerksamkeitsbedarfskarte mit einem Koordinatenursprung gebildet wird, der einen Mittelpunkt eines Aufenthaltsbereiches eines Kopfes des Fahrers im Fahrzeug repräsentiert. Dadurch kann der Einfluss longitudinaler Abweichungen der Kopfposition des Fahrers beim Ermitteln der visuellen Ablenkung minimiert werden.

Gemäß einer weiteren Ausführungsform kann im Schritt des Vergleichens eine Differenz aus der Aufmerksamkeitskarte und der Aufmerksamkeitsbedarfskarte gebildet werden, um einen eine positive oder negative Abweichung der Ist-Verteilung von der Soll-Verteilung repräsentierenden Wert als den Ablenkungswert zu ermitteln. Der Ablenkungswert entspricht dabei beispielsweise einer Differenz zwischen dem Ist- und dem Sollwert bzw. einer Ist-Verteilung und einer Soll-Verteilung. Dadurch wird eine differenzierte Detektion der Aufmerksamkeitsverteilung in der Umgebung des Fahrzeugs ermöglicht.

Gemäß einer weiteren Ausführungsform kann im Schritt des Modellierens unter Verwendung der Fahrerinformation ein zu einer fovealen Sehachse des Fahrers konzentrischer Exzentrizitätswinkel ermittelt und verwendet werden, um eine periphere Wahrnehmung des Fahrers zu modellieren. Diese Modellierung kann beispielsweise durch unterschiedliche Gewichtung der angenommenen Aufmerksamkeit in zentralen und peripheren Sichtbereichen erfolgen. Entsprechend kann die Aufmerksamkeitskarte unter Berücksichtigung der modellierten peripheren Wahrnehmung gebildet werden. Unter einer fovealen Sehachse kann beispielsweise eine gedachte gerade Linie, die vom Mittelpunkt der Fovea centralis (Netzhaut) durch den Mittelpunkt der Pupille verläuft, verstanden werden. Dadurch kann die visuelle Ablenkung des Fahrers unter Berücksichtigung der peripheren Wahrnehmung des Fahrers ermittelt werden. Somit kann die Zuverlässigkeit des Verfahrens deutlich erhöht werden.

Es ist vorteilhaft, wenn im Schritt des Modellierens die Fahrerinformation unter Verwendung einer Gewichtungsfunktion zeitabhängig gewichtet wird. Dabei kann die Aufmerksamkeitskarte unter Verwendung der gewichteten Fahrerinformation gebildet werden. Unter einer Gewichtungsfunktion kann beispielsweise eine Verfallsfunktion verstanden werden, mit der eine Blickrichtung oder Kopfhaltung des Fahrers entsprechend ihres Alters multipliziert werden kann. Dadurch kann ein dem menschlichen Erinnerungsvermögen entsprechendes zeitliches Verblassen eines visuellen Eindrucks, der einer bestimmten Blickrichtung oder Kopfhaltung des Fahrers entsprechen kann, beim Ermitteln der visuellen Ablenkung berücksichtigt werden.

Ferner kann im Schritt des Modellierens die Fahrerinformation verwendet werden, um einen starren Blick des Fahrers zu erkennen. Dabei kann die Aufmerksamkeitskarte abhängig von einer Erkennung des starren Blicks des Fahrers gebildet werden. Unter einem starren Blick kann ein Blick mit geringem Informationsgehalt oder fehlender Informationsaufnahme verstanden werden. Durch diese Ausführungsform kann die Zuverlässigkeit des Verfahrens weiter erhöht werden.

Des Weiteren kann im Schritt des Modellierens unter Verwendung der Fahrerinformation ein Spiegelblick oder, zusätzlich oder alternativ, ein Schulterblick des Fahrers ermittelt werden. Dabei kann die Aufmerksamkeitskarte dementsprechend unter Berücksichtigung des Spiegelblicks oder des Schulterblicks oder beider Blickarten gebildet werden. Durch diese Ausführungsform wird eine besonders genaue Detektion der visuellen Ablenkung ermöglicht.

Gemäß einer weiteren Ausführungsform kann im Schritt des Modellierens die Aufmerksamkeitsbedarfskarte unter Verwendung einer von einem Umfeldsensor des Fahrzeugs bereitgestellten Umfeldinformation oder, zusätzlich oder alternativ, einer Navigationsinformation zum Navigieren des Fahrzeugs anhand einer digitalen Karte gebildet werden. Dadurch kann die visuelle Ablenkung situationsabhängig mit hoher Genauigkeit ermittelt werden.

Dabei kann im Schritt des Modellierens die Umfeldinformation zusätzlich oder alternativ, die Navigationsinformation einen Straßentyp, eine Fahrspuranzahl, eine Fahrspurposition, eine Fahrspurkrümmung oder eine Objektinformation bezüglich zumindest eines Objekts in der Umgebung des Fahrzeugs oder eine Kombination aus zumindest zwei der genannten Parameter repräsentieren. Die Objektinformation kann beispielsweise eine Position, eine Art oder eine Zustandsänderung des Objekts repräsentieren. Dadurch wird eine besonders genaue situationsabhängige Modellierung der visuellen Ablenkung ermöglicht.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung des Fahrzeugs. Hierzu kann die Vorrichtung beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät des Fahrzeugs.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1 eine schematische Darstellung eines Fahrzeugs mit einer Vorrichtung gemäß einem Ausführungsbeispiel;

Fig. 2 eine schematische Darstellung einer Vorrichtung gemäß einem Ausführungsbeispiel;

Fig. 3 ein Ablaufdiagramm eines Verfahrens gemäß einem Ausführungsbeispiel;

Fig. 4 ein Ablaufdiagramm eines Verfahrens gemäß einem Ausführungsbeispiel;

Fig. 5 eine schematische Darstellung eines Koordinatensystems zur Verwendung in einem Verfahren gemäß einem Ausführungsbeispiel;

Fig. 6 eine schematische Darstellung einer Aufmerksamkeitskarte gemäß einem Ausführungsbeispiel;

Fig. 7 ein Diagramm zur Darstellung einer Aufmerksamkeitsdichtefunktion zur Verwendung in einem Verfahren gemäß einem Ausführungsbeispiel;

Fig. 8 ein Diagramm zur Darstellung einer Gewichtungsfunktion zur Verwendung in einem Verfahren gemäß einem Ausführungsbeispiel; und

Fig. 9 eine schematische Darstellung einer Blickverteilung in einem Fahrzeug.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

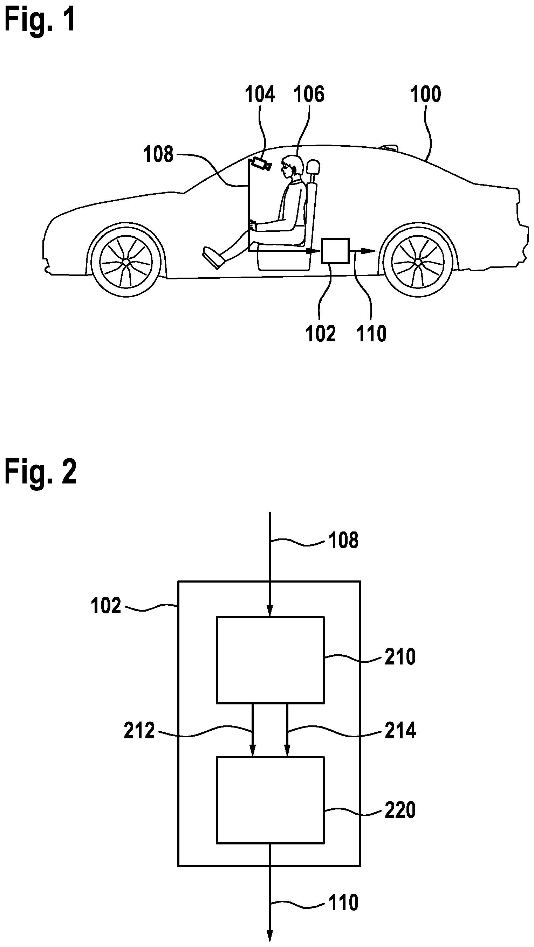

Fig. 1 zeigt eine schematische Darstellung eines Fahrzeugs 100 mit einer Vorrichtung 102 gemäß einem Ausführungsbeispiel. Die Vorrichtung 102 ist mit einem Innenraumsensor 104 zum Erfassen einer Blickrichtung oder einer Kopfhaltung eines Fahrers 106 gekoppelt, beispielsweise einer (Infrarot-)Kamera. Dabei sendet der Innenraumsensor 104 eine die Blickrichtung oder Kopfhaltung repräsentierende Fahrerinformation 108 an die Vorrichtung 102, die ausgebildet ist, um diese zur Modellierung einer Aufmerksamkeitskarte, die eine Ist-Verteilung der Aufmerksamkeit des Fahrers 106 repräsentiert, zu verwenden. Durch die Aufmerksamkeitskarte werden beispielsweise Blickrichtungen, die sich je nach Aufmerksamkeitsverteilung in unterschiedlichen Bereichen einer Umgebung des Fahrzeugs 100 unterschiedlich stark akkumulieren, zweidimensional nach Art einer Heatmap abgebildet. Die Aufmerksamkeitskarte basiert hierbei auf einem zweidimensionalen Koordinatensystem, das beispielsweise einen aufmerksamkeitsrelevanten Bereich der Fahrzeugumgebung wiedergibt. Insbesondere basiert die Aufmerksamkeitskarte auf einem zweidimensionalen Kugelkoordinatensystem zur Nachbildung der Fahrzeugumgebung.

Die Vorrichtung 102 ist ferner ausgebildet, um Bereiche der Fahrzeugumgebung, die einer erhöhten Aufmerksamkeit des Fahrers bedürfen, in einer entsprechenden Aufmerksamkeitsbedarfskarte analog zur Aufmerksamkeitskarte unter Verwendung des zweidimensionalen Koordinatensystems zu modellieren. Optional erfolgt die Modellierung der Aufmerksamkeitsbedarfskarte ebenfalls unter Verwendung der Fahrerinformation 108, d. h. abhängig von einer jeweiligen Blickrichtung oder Kopfhaltung des Fahrers 106 bezüglich der Fahrzeugumgebung. Die Aufmerksamkeitsbedarfskarte repräsentiert somit im Gegensatz zur Aufmerksamkeitskarte eine Soll-Verteilung der Aufmerksamkeit des Fahrers 106.

Um die visuelle Ablenkung des Fahrers 106 zu ermitteln, führt die Vorrichtung 102 einen Vergleich zwischen den beiden Karten durch, etwa mittels Differenzbildung. Als Ergebnis dieses Vergleichs gibt die Vorrichtung 102 einen die visuelle Ablenkung repräsentierenden Ablenkungswert 110 aus. Dieser wird beispielsweise von einem Steuergerät des Fahrzeugs 100 verwendet, um in Abhängigkeit von der visuellen Ablenkung einen Warnhinweis zum Warnen des Fahrers 106 oder, etwa im Kontext einer teil- oder hochautomatisierten Steuerung des Fahrzeugs 100, ein Ansteuersignal zum Ansteuern zumindest eines Aktors des Fahrzeugs 100, etwa eines Lenk- oder Bremsaktors, zu generieren.

Zur Detektion einer unzulänglichen visuellen Ablenkung des Fahrers 106 wird ein Soll-Ist-Vergleich einer selektiven (gerichteten) Fahreraufmerksamkeit mit dem sich ergebenden Aufmerksamkeitsbedarf aus der Fahrzeugumgebung durchgeführt. Dazu werden grundsätzlich die folgenden drei Schritte unter Verwendung der Vorrichtung 102 durchgeführt:

1. Detektion des selektiven visuellen Aufmerksamkeitszustandes des Fahrers;

2. Detektion des Aufmerksamkeitsbedarfs aus der Fahrzeugumgebung; und

3. Detektion von unzulässiger Ablenkung mithilfe eines Soll-Ist-Vergleiches.

Fig. 2 zeigt eine schematische Darstellung einer Vorrichtung 102 gemäß einem Ausführungsbeispiel, beispielsweise einer vorangehend anhand von Fig. 1 beschriebenen Vorrichtung. Die Vorrichtung 102 umfasst eine Modellierungseinheit 210, die ausgebildet ist, um die Fahrerinformation 108 einzulesen und diese zur Bildung der Aufmerksamkeitskarte zu verwenden. Ferner ist die Modellierungseinheit 210 ausgebildet, um den Aufmerksamkeitsbedarf durch Bilden der Aufmerksamkeitsbedarfskarte zu modellieren. Die Modellierungseinheit 210 sendet einen die Aufmerksamkeitskarte repräsentierenden ersten Datensatz 212 sowie einen die Aufmerksamkeitsbedarfskarte repräsentierenden zweiten Datensatz 214 an eine Vergleichseinheit 220, die ausgebildet ist, um die beiden Karten anhand der beiden Datensätze 212, 214 miteinander zu vergleichen und so den die visuelle Ablenkung des Fahrers repräsentierenden Ablenkungswert 110 zu ermitteln.

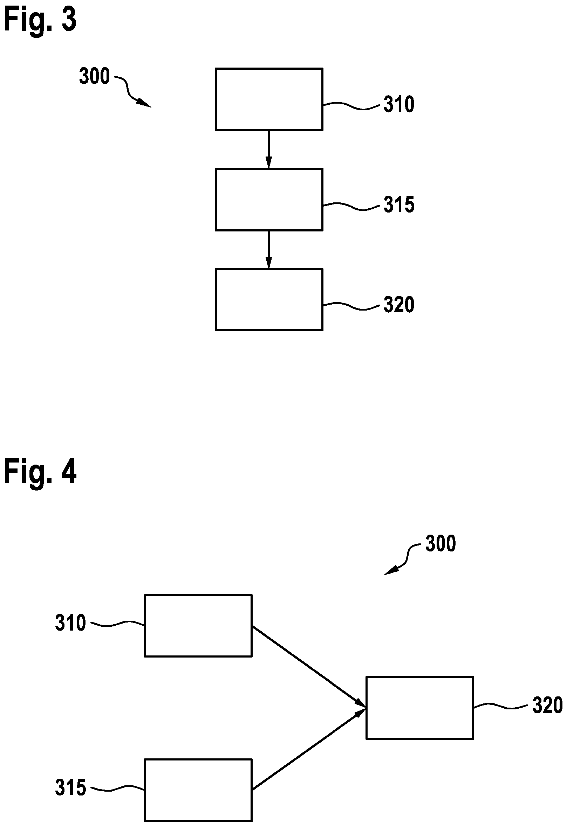

Fig. 3 zeigt ein Ablaufdiagramm eines Verfahrens 300 gemäß einem Ausführungsbeispiel. Das Verfahren 300 zum Ermitteln einer visuellen Ablenkung eines Fahrers kann beispielsweise unter Verwendung einer Vorrichtung, wie sie vorangehend anhand der Figuren 1 und 2 beschrieben ist, durchgeführt werden. Dabei erfolgt in einem Schritt 310 die Modellierung der Aufmerksamkeit des Fahrers durch Bilden der Aufmerksamkeitskarte. Des Weiteren erfolgt in einem Schritt 315 die Modellierung des Aufmerksamkeitsbedarfs durch Bilden der Aufmerksamkeitsbedarfskarte, etwa in Form einer Coldmap. Die beiden Karten werden in einem Schritt 320 miteinander verglichen, um den die visuelle Ablenkung des Fahrers repräsentierenden Ablenkungswert zu ermitteln.

Fig. 4 zeigt ein Ablaufdiagramm eines Verfahrens 300 gemäß einem Ausführungsbeispiel. Gezeigt ist ein Grundmodell zur Erkennung von unzulässiger visueller Ablenkung. Dabei erfolgt im Schritt 310 die Detektion einer selektiven visuellen Aufmerksamkeit des Fahrers durch Modellierung der Aufmerksamkeitskarte und im Schritt 315 die Detektion des Aufmerksamkeitsbedarfs aus dem Umgebungszustand durch Modellierung der Aufmerksamkeitsbedarfskarte. Im Schritt 320 wird schließlich eine Ablenkungshypothese durch Detektion von unzulässiger Ablenkung anhand eines Soll-Ist-Vergleichs zwischen den beiden Karten erstellt.

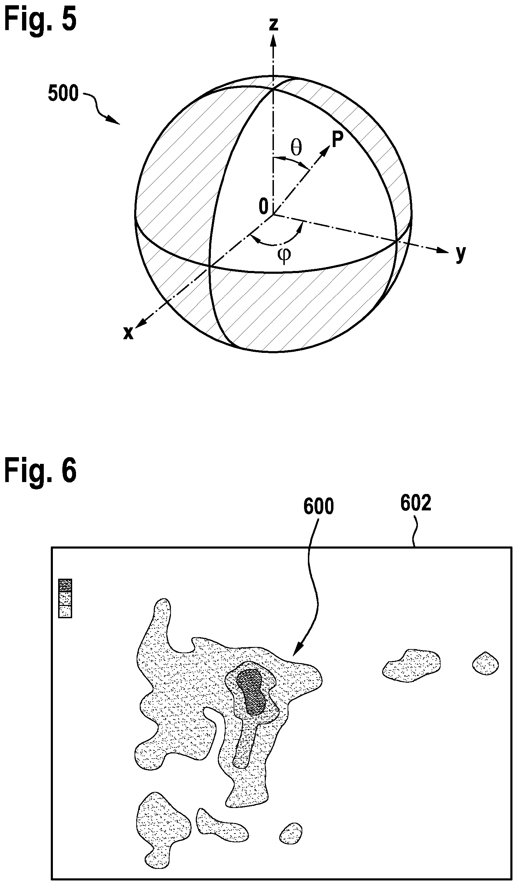

Fig. 5 zeigt eine schematische Darstellung eines Koordinatensystems 500 zur Verwendung in einem Verfahren gemäß einem Ausführungsbeispiel, etwa einem vorangehend anhand der Figuren 1 bis 4 beschriebenen Verfahren. Gezeigt ist beispielhaft ein Kugelkoordinatensystem mit den Polarkoordinaten Polarwinkel $\varphi$ und Azimutwinkel $\theta$ zur Darstellung von Aufmerksamkeitsrichtungen.

Zur Modellierung eines Aufmerksamkeitszustandes des Fahrers sowie des Aufmerksamkeitsbedarfs aus der Umgebung werden sogenannte Heatmaps verwendet. Dabei werden beispielsweise Kugelkoordinaten verwendet, um Richtungen der Aufmerksamkeit in eine zweidimensionale Abbildung zu transformieren (Polarwinkel $\varphi$ und Azimutwinkel $\theta$). Entsprechend ist eine derartige Heatmap mithilfe einer n×m-Matrix vollständig beschreibbar. Analog dazu wird der Aufmerksamkeitsbedarf mit einer Coldmap, die eine "negative Hitze" abbildet, beschrieben.

Der Ursprung 0 dieser Heatmap sollte im Mittelpunkt einer Headbox liegen, also in einem Bereich, in dem sich der Kopf des Fahrers üblicherweise aufhält. Fehler, die dadurch entstehen, dass sich der Kopf des Fahrers nicht an dieser Stelle aufhält, können vernachlässigt werden, da die Abweichungen der Kopfpositionen im Vergleich zum longitudinalen Abstand zu den angeschauten Objekten außerhalb des Fahrzeugs gering sind. Entsprechend werden die Heat- und Coldmap nur für Objekte außerhalb des Fahrzeugs verwendet.

Gemäß einem Ausführungsbeispiel werden diese Heat- und Coldmaps auf einer Sphäre rund um das Fahrzeug aufgespannt, um das gesamte Umfeld des Fahrzeugs modellieren zu können, etwa mit einem Wertebereich für den Polarwinkel $\varphi$ zwischen minus 180 Grad und plus 180 Grad. Der Wertebereich für den Azimutwinkel $\theta$ kann geringer ausfallen und liegt beispielsweise zwischen minus 60 Grad und plus 60 Grad, wobei 0 Grad einer Waagerechten entspricht.

Fig. 6 zeigt eine schematische Darstellung einer Aufmerksamkeitskarte 600 gemäß einem Ausführungsbeispiel. Gezeigt ist ein Beispiel für eine Heatmap als Aufmerksamkeitskarte zur Visualisierung der Aufmerksamkeitsverteilung. Die Fahrzeugumgebung ist dabei lediglich beispielhaft durch ein Rechteck 602 angedeutet. Dabei sind beispielsweise Kartenbereiche mit unterschiedlich starker Akkumulation von Blickrichtungen unterschiedlich farbig dargestellt.

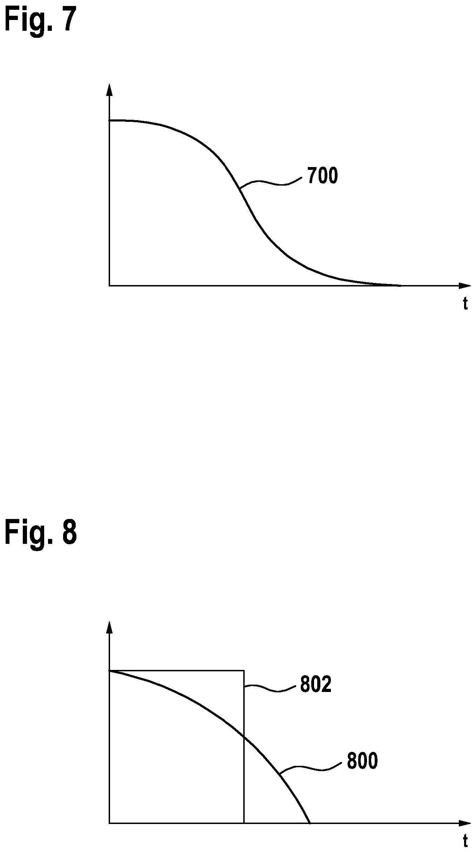

Fig. 7 zeigt ein Diagramm zur Darstellung einer Aufmerksamkeitsdichtefunktion 700 zur Verwendung in einem Verfahren gemäß einem Ausführungsbeispiel, etwa einem vorangehend anhand der Figuren 1 bis 6 beschriebenen Verfahren. Die Aufmerksamkeitsdichte ist dabei in Abhängigkeit von einem Exzentrizitätswinkel $\beta$ dargestellt. Eine nähere Beschreibung der Aufmerksamkeitsdichtefunktion 700 kann der nachfolgenden Beschreibung entnommen werden.

Fig. 8 zeigt ein Diagramm zur Darstellung einer Gewichtungsfunktion 800, hier einer Verfallsfunktion, zur Verwendung in einem Verfahren gemäß einem Ausführungsbeispiel, etwa einem vorangehend anhand der Figuren 1 bis 7 beschriebenen Verfahren. Die Gewichtungsfunktion 800 ist in Abhängigkeit von einer Zeit t dargestellt und repräsentiert beispielhaft ein modelliertes Erinnerungsvermögen des Fahrers. Ferner ist ein Standardzeitfenster 802, in dem die Blickrichtung oder Kopfhaltung des Fahrers standardmäßig verarbeitet wird, etwa mit einer Fenstergröße von 5 Sekunden, eingezeichnet. Die Gewichtungsfunktion 800 dient zur Berücksichtigung eines Verfallens von Blicken nach einer gewissen Zeit. Ein entsprechender Verfallsfaktor wird beispielsweise durch eine Funktion in Abhängigkeit der vergangenen Zeit beschrieben.

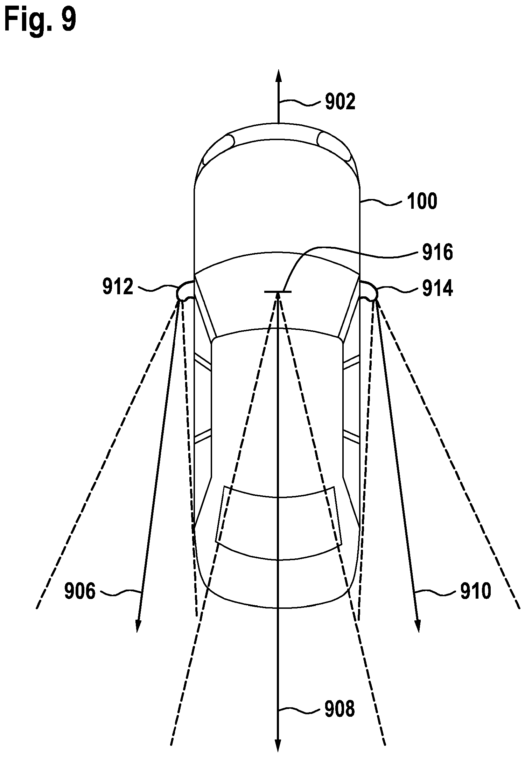

Fig. 9 zeigt eine schematische Darstellung einer Blickverteilung in einem Fahrzeug 100, etwa einem vorangehend anhand von Fig. 1 beschriebenen Fahrzeug. Das Fahrzeug 100 ist in der Draufsicht gezeigt, eine Fahrtrichtung des Fahrzeugs 100 ist mit einem in Fig. 9 nach oben weisenden Pfeil 902 markiert. Drei der Fahrtrichtung entgegengerichtete Pfeile 906, 908, 910 symbolisieren jeweils Blickrichtungen des Fahrers beim Blicken durch einen linken Außenspiegel 912, einen rechten Außenspiegel 914 und einen Innenspiegel 916.

Nachfolgend wird der hier vorgestellte Ansatz nochmals modular beschrieben.

Um im Rahmen der Ablenkungshypothese eine unzulässig hohe Ablenkung zu detektieren, wird beispielsweise lediglich eine Differenz beider Maps - Heatmap und Coldmap - gebildet:

Aufmerksamkeitslücke($\phi$,$\theta$) = Aufmerksamkeitsbedarf($\phi$,$\theta$) - Aufmerksamkeit($\phi$,$\theta$)

oder auch

$$\text{Aufmerksamkeitslücke}(\varphi,\theta) = \text{Coldmap}(\varphi,\theta) - \text{Heatmap}(\varphi,\theta)$$

Bereiche mit mehr "Kälte" sind Bereiche, denen der Fahrer zu wenig visuelle Aufmerksamkeit schenkt. Dies kann auch als positive Aufmerksamkeitslücke bezeichnet werden. Bereichen mit mehr "Wärme" schenkt der Fahrer hingegen zu viel Aufmerksamkeit, auch negative Aufmerksamkeitslücke genannt, was eine Ablenkung des Fahrers bedeutet.

Im Rahmen einer Grenzwertüberschreitung wird beispielsweise eine Warnfunktion angetriggert. Dabei ist im Gegensatz zum Stand der Technik nicht nur die Tatsache bekannt, dass der Fahrer abgelenkt ist, sondern es sind zudem diejenigen Bereiche, denen er zu viel Aufmerksamkeit schenkt, und diejenigen Bereiche, denen er zu wenig Aufmerksamkeit schenkt, bekannt. Dies hat den Vorteil, dass die visuelle Aufmerksamkeit des Fahrers durch geeignete HMI-Funktionen wie etwa LED-Laufbänder, eine richtungsabhängige Darstellung von Tönen oder Vibrationen in die der aktuellen Situation entsprechende Richtung geleitet werden kann.

Die Detektion der selektiven visuellen Aufmerksamkeit des Fahrers erfolgt im einfachsten Fall durch Beschreibung einer Akkumulation der Blickrichtungen in einem sich bewegenden Fenster. Die Fenstergröße wird dabei beispielsweise auf 5 Sekunden gesetzt und beschreibt jeweils die vergangenen 5 Sekunden. Es sind verschiedene modulare Erweiterungen denkbar, die jeweils die Genauigkeit der Modellierung erhöhen können. Diese werden im Folgenden beispielhaft beschrieben.

Zur Modellierung einer peripheren Wahrnehmung wird der Exzentrizitätswinkel $\beta$ konzentrisch zur fovealen Achse des Fahrers verwendet. Je größer $\beta$ ist, desto geringer ist das Wahrnehmungsvermögen des Fahrers an dieser Stelle. Mit einer entsprechenden Funktion wird also die die Aufmerksamkeitsdichte, d. h. die "Hitze"-Dichte, konzentrisch um die foveale Blickrichtung des Fahrers modelliert. Entsprechend dieser Aufmerksamkeitsdichtefunktion, wie sie in Fig. 8 gezeigt ist, wird dann die Aufmerksamkeitskarte aufgebaut.

Zur Modellierung eines Erinnerungsvermögens wird die zeitliche Komponente des menschlichen Erinnerns betrachtet. In einer Standardvariante einer Fensterfunktion verfallen Blicke nach einem gewissen Zeitraum, beispielsweise entsprechend der weiter oben genannten Fenstergröße nach 5 Sekunden. Um nun das zeitliche Erinnern besser modellieren zu können, wird eine Verfallsfunktion eingeführt, mit der vergangene Blicke entsprechend ihres Alters multipliziert werden.

Um starren Blick, d. h. Blicke mit fehlender Informationsaufnahme, in der Modellierung zu berücksichtigen, wird der starre Blick zunächst entsprechend erkannt, etwa anhand einer Sakkaden- und Fixationsfrequenz. Sobald ein starrer Blick des Fahrers erkannt wird, wird die Akkumulation der Blickrichtungen zur Aufmerksamkeitskarte, d. h. zur Heatmap, gestoppt, sodass für diese Zeiträume keine zusätzliche "Hitze" berücksichtigt wird. Wird dieser Zustand für einen längeren Zeitraum aufrechterhalten, so resultiert dies demzufolge in einer leeren Heatmap - der Fahrer zeigt keinerlei Aufmerksamkeit.

Spiegelblicke in einen der vorhandenen Außenspiegel gelten stets der Fahrzeugumgebung, jedoch üblicherweise eines hinteren Bereich des Fahrzeugs. Entsprechend werden Spiegelblicke gemäß einem Ausführungsbeispiel als Blicke nach hinten gewertet und bei der Berechnung der Aufmerksamkeitskarte als solche berücksichtigt. Aus diesem Grund ist es vorteilhaft, wenn die Aufmerksamkeitskarte um das gesamte Fahrzeug, und nicht nur um dessen vorderen Teil, aufgebaut wird.

Infolge der möglichen Krümmung der Spiegel ist eine angepasste Modellierung des peripheren Sehens bei erkannten Spiegelblicken erforderlich. Insbesondere da die Spiegelorientierung nicht immer bekannt ist, etwa beim Innenspiegel, sollten jeweils Standardverteilungen verwendet werden. Diese sind abhängig davon, in welchen Spiegel geschaut wurde.

Bei erkannten Schulterblicken ist die eigentliche Blickrichtung aufgrund von Sensordefiziten nicht immer bekannt. In diesem Fall wird stattdessen beispielsweise eine angepasste Aufmerksamkeitsverteilung in Abhängigkeit von einer erkannten Kopfrotation des Fahrers verwendet. Es können auch Standardverteilungen zum Einsatz kommen.

Der Aufmerksamkeitsbedarf aus der Fahrzeugumgebung wird abhängig von der zur Verfügung stehenden Information über die Fahrzeugumgebung modelliert. Im einfachsten Fall ist keine Information über die Fahrzeugumgebung verfügbar. In diesem Fall wird beispielsweise eine Standardverteilung für die Aufmerksamkeitsbedarfskarte verwendet. Dies erfolgt optional unter Berücksichtigung von Spiegel- und Schulterblicken des Fahrers.

Je nach verfügbarer Information über die Fahrzeugumgebung wird die Aufmerksamkeitsbedarfskarte entsprechend den Anforderungen wie folgt angepasst.

Über eine entsprechende Navigationsinformation ist beispielsweise ein Straßentyp wie innerörtliche Straße, Landstraße oder Autobahn verfügbar. Je nach erkanntem Straßentyp verändert sich der Aufmerksamkeitsbedarf. So ist etwa im urbanen Raum eine viel breitere Verteilung der Aufmerksamkeit erforderlich als auf Autobahnen. Dies ist beispielsweise in Standard-Aufmerksamkeitsbedarfskarten für die jeweiligen Umgebungen hinterlegt. Dabei wird etwa auch das Vorhandensein von Infrastrukturelementen wie Kreuzungen oder Zebrastreifen in entsprechenden Coldmaps mitberücksichtigt.

Je nach Vorhandensein der verschiedenen Umgebungen werden die verschiedenen Coldmaps umgeschaltet.

Durch Außenkamera-Informationen können Straßeneigenschaften bekannt sein. Dabei werden mittels einer Außenkamera Informationen wie Anzahl der Fahrspuren, Spurposition oder Krümmung der Fahrspuren, d. h. das Vorhandensein von Kurven, zur Verfügung gestellt. Diese Informationen werden dazu verwendet, die Aufmerksamkeitsbedarfskarte entsprechend anzupassen.

Je nach Spurposition ist neben dem Ego-Fahrzeug eventuell keine weitere Spur mehr vorhanden. Dementsprechend ist hier auch nur noch weniger Aufmerksamkeit erforderlich. Bei Gegenfahrbahnen ist möglicherweise mehr Aufmerksamkeit erforderlich.

Je nach Vorhandensein, Richtung und Stärke von Kurven wird der gesamte Aufmerksamkeitsbedarf beispielsweise nach links oder rechts verschoben und dementsprechend angepasst.

Sind Positionen und Arten von Umfeldobjekten wie Fahrzeugen, Fußgängern und anderen Verkehrsteilnehmern über entsprechende Umfeldmodellinformationen verfügbar, so werden etwa auch diese zur Anpassung des Aufmerksamkeitsbedarfes verwendet. Insbesondere in Verbindung mit Kollisionswarnsystemen wie Notbremsassistent, Kreuzungsassistent oder Spurwechselassistent ist zusätzlich eine Bewertung der Kritikalität der jeweiligen Objekte verfügbar.

Diese Information wird nun dazu verwendet, an den entsprechenden Stellen in der Coldmap zusätzliche "Kälte" zu erzeugen. Diese sollte der Position und der Kritikalität der jeweiligen Objekte entsprechen. Je höher die Kritikalität, desto mehr Kälte wird erzeugt.

Zustandsveränderungen von Objekten wie Änderungen der Geschwindigkeit oder plötzliches Bremsen werden vom Fahrer üblicherweise nur dann wahrgenommen, wenn er auch in die entsprechende Richtung schaut. Werden solche Zustandsänderungen erkannt, wird dies gemäß einem Ausführungsbeispiel in der Modellierung des Aufmerksamkeitsbedarfes entsprechend berücksichtigt: Je größer die Zustandsänderung eines Objekts, desto mehr "Kälte" wird an der jeweiligen Stelle erzeugt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (300) zum Ermitteln einer visuellen Ablenkung eines Fahrers (106) eines Fahrzeugs (100), wobei das Verfahren (300) folgende Schritte umfasst:

   Modellieren (310) einer Aufmerksamkeit des Fahrers (106) durch Bilden einer Aufmerksamkeitskarte (212; 600) unter Verwendung einer Fahrerinformation (108), die eine mittels eines Sensors (104) des Fahrzeugs (100) erfasste Blickrichtung und/oder Kopfhaltung des Fahrers (106) und/oder eine Orientierung eines Oberkörpers des Fahrers (106) repräsentiert, wobei die Aufmerksamkeitskarte (212; 600) eine von der Blickrichtung und/oder der Kopfhaltung abhängige Ist-Verteilung der Aufmerksamkeit des Fahrers (106) in einem zweidimensionalen Koordinatensystem (500) repräsentiert, wobei das zweidimensionale Koordinatensystem (500) zumindest einen Teilbereich einer Umgebung des Fahrzeugs (100) abbildet;
   Modellieren (315) eines Aufmerksamkeitsbedarfs durch Bilden einer Aufmerksamkeitsbedarfskarte (214), wobei die Aufmerksamkeitsbedarfskarte (214) eine Soll-Verteilung der Aufmerksamkeit des Fahrers (106) in dem zweidimensionalen Koordinatensystem (500) repräsentiert; und
   Vergleichen (320) der Aufmerksamkeitskarte (212; 600) mit der Aufmerksamkeitsbedarfskarte (214), um einen die visuelle Ablenkung des Fahrers (106) repräsentierenden Ablenkungswert (110) zu ermitteln.

2. Verfahren (300) gemäß Anspruch 1, bei dem im Schritt des Modellierens (310, 315) die Aufmerksamkeitskarte (212; 600) und/oder die Aufmerksamkeitsbedarfskarte (214) auf der Basis eines Kugelkoordinatensystems (500) gebildet wird.

3. Verfahren (300) gemäß Anspruch 2, bei dem im Schritt des Modellierens (310, 315) das Kugelkoordinatensystem (500) einen Polarwinkelbereich zwischen minus 180 Grad und plus 180 Grad und/oder einen Azimutwinkelbereich zwischen minus 60 Grad und plus 60 Grad aufweist.

4. Verfahren (300) gemäß einem der vorangegangenen Ansprüche, bei dem im Schritt des Modellierens (310, 315) die Aufmerksamkeitskarte (212; 600) und/oder die Aufmerksamkeitsbedarfskarte (214) mit einem Koordinatenursprung (0) gebildet wird, der einen Mittelpunkt eines Aufenthaltsbereiches eines Kopfes des Fahrers (106) im Fahrzeug (100) repräsentiert.

5. Verfahren (300) gemäß einem der vorangegangenen Ansprüche, bei dem im Schritt des Vergleichens (320) eine Differenz aus der Aufmerksamkeitskarte (212; 600) und der Aufmerksamkeitsbedarfskarte (214) gebildet wird, um einen eine positive und/oder negative Abweichung der Ist-Verteilung von der Soll-Verteilung repräsentierenden Wert als den Ablenkungswert (110) zu ermitteln.

6. Verfahren (300) gemäß einem der vorangegangenen Ansprüche, bei dem im Schritt des Modellierens (310) unter Verwendung der Fahrerinformation (108) ein zu einer fovealen Sehachse des Fahrers (106) konzentrischer Exzentrizitätswinkel ermittelt und verwendet wird, um eine periphere Wahrnehmung des Fahrers (106) zu modellieren, wobei die Aufmerksamkeitskarte (212; 600) unter Berücksichtigung der modellierten peripheren Wahrnehmung gebildet wird.

7. Verfahren (300) gemäß einem der vorangegangenen Ansprüche, bei dem im Schritt des Modellierens (310) die Fahrerinformation (108) unter Verwendung einer Gewichtungsfunktion (800) zeitabhängig gewichtet wird, wobei die Aufmerksamkeitskarte (212; 600) unter Verwendung der gewichteten Fahrerinformation (108) gebildet wird.

8. Verfahren (300) gemäß einem der vorangegangenen Ansprüche, bei dem im Schritt des Modellierens (310) die Fahrerinformation (108) verwendet wird, um einen starren Blick des Fahrers (106) zu erkennen, wobei die Aufmerksamkeitskarte (212; 600) abhängig von der Erkennung des starren Blicks des Fahrers (106) gebildet wird.

9. Verfahren (300) gemäß einem der vorangegangenen Ansprüche, bei dem im Schritt des Modellierens (310) unter Verwendung der Fahrerinformation (108) ein Spiegel- und/oder Schulterblick des Fahrers (106) ermittelt wird, wobei die Aufmerksamkeitskarte (212; 600) unter Berücksichtigung des Spiegel- und/oder Schulterblicks gebildet wird.

10. Verfahren (300) gemäß einem der vorangegangenen Ansprüche, bei dem im Schritt des Modellierens (315) die Aufmerksamkeitsbedarfskarte (214) unter Verwendung einer von einem Umfeldsensor des Fahrzeugs (100) bereitgestellten Umfeldinformation und/oder einer Navigationsinformation zum Navigieren des Fahrzeugs (100) anhand einer digitalen Karte gebildet wird.

11. Verfahren (300) gemäß Anspruch 10, bei dem im Schritt des Modellierens (315) die Umfeldinformation und/oder die Navigationsinformation einen Straßentyp und/oder eine Fahrspuranzahl und/oder eine Fahrspurposition und/oder eine Fahrspurkrümmung und/oder eine Objektinformation, die eine Position und/oder Art und/oder Zustandsänderung zumindest eines Objekts in der Umgebung des Fahrzeugs (100) repräsentiert, repräsentiert.

12. Vorrichtung (102) mit Einheiten (210, 220), die ausgebildet sind, um das Verfahren (300) gemäß einem der Ansprüche 1 bis 11 auszuführen und/oder anzusteuern.

13. Computerprogramm, das ausgebildet ist, um das Verfahren (300) gemäß einem der Ansprüche 1 bis 11 auszuführen und/oder anzusteuern.

14. Maschinenlesbares Speichermedium, auf dem das Computerprogramm nach Anspruch 13 gespeichert ist.

**Claims**

1. Method (300) for determining visual distraction of a driver (106) of a vehicle (100), wherein the method (300) comprises the following steps:

modelling (310) the attention of the driver (106) by forming an attention map (212; 600) using driver information (108) representing a gaze direction and/or head posture of the driver (106) and/or an orientation of a torso of the driver (106) as detected by way of a sensor (104) of the vehicle (100), wherein the attention map (212; 600) represents an actual distribution of the attention of the driver (106) in a two-dimensional coordinate system (500), which actual distribution is dependent on the gaze direction and/or the head posture, wherein the two-dimensional coordinate system (500) maps at least a partial region of surroundings of the vehicle (100) ;
modelling (315) an attention requirement by forming an attention requirement map (214), wherein the attention requirement map (214) represents a target distribution of the attention of the driver (106) in the two-dimensional coordinate system (500); and
comparing (320) the attention map (212; 600) with the attention requirement map (214) in order to determine a distraction value (110) representing the visual distraction of the driver (106).

2. Method (300) according to Claim 1, in which, in the modelling step (310, 315), the attention map (212; 600) and/or the attention requirement map (214) is formed on the basis of a spherical coordinate system (500).

3. Method (300) according to Claim 2, in which, in the modelling step (310, 315), the spherical coordinate system (500) has a polar angular range between minus 180 degrees and plus 180 degrees and/or an azimuth angular range between minus 60 degrees and plus 60 degrees.

4. Method (300) according to one of the preceding claims, in which, in the modelling step (310, 315), the attention map (212; 600) and/or the attention requirement map (214) is formed with a coordinate origin (0) that represents a centre point of a presence region of a head of the driver (106) in the vehicle (100).

5. Method (300) according to one of the preceding claims, in which, in the comparing step (320), a difference between the attention map (212; 600) and the attention requirement map (214) is formed in order to determine a value representing a positive and/or negative deviation of the actual distribution from the target distribution as the distraction value (110).

6. Method (300) according to one of the preceding claims, in which, in the modelling step (310), an eccentricity angle concentric with respect to a foveal visual axis of the driver (106) is determined using the driver information (108) and is used to model a peripheral perception of the driver (106), wherein the attention map (212; 600) is formed taking into consideration the modelled peripheral perception.

7. Method (300) according to one of the preceding claims, in which, in the modelling step (310), the driver information (108) is weighted in a time-dependent manner using a weighting function (800), wherein the attention map (212; 600) is formed using the weighted driver information (108).

8. Method (300) according to one of the preceding claims, in which, in the modelling step (310), the driver information (108) is used to recognize a fixed gaze of the driver (106), wherein the attention map (212; 600) is formed depending on the recognition of the fixed gaze of the driver (106).

9. Method (300) according to one of the preceding claims, in which, in the modelling step (310), a mirror view and/or over-the-shoulder view of the driver (106) is determined using the driver information (108), wherein the attention map (212; 600) is formed taking into consideration the mirror view and/or over-the-shoulder view.

10. Method (300) according to one of the preceding claims, in which, in the modelling step (315), the attention requirement map (214) is formed using surroundings information provided by a surroundings sensor of the vehicle (100) and/or navigation information for navigating the vehicle (100) on the basis of a digital map.

11. Method (300) according to Claim 10, wherein, in the modelling step (315), the surroundings information and/or the navigation information represents a road type and/or a number of lanes and/or a lane position and/or a lane curvature and/or object information representing a position and/or type and/or change of state of at least one object in the surroundings of the vehicle (100).

12. Device (102) comprising units (210, 220) that are designed to carry out and/or control the method (300) according to one of Claims 1 to 11.

13. Computer program designed to carry out and/or control the method (300) according to one of Claims 1 to 11.

14. Machine-readable storage medium on which the computer program according to Claim 13 is stored.

**Revendications**

1. Procédé (300) de détermination d'une distraction visuelle d'un conducteur (106) d'un véhicule (100), le procédé (300) comprenant les étapes suivantes :

la modélisation (310) d'une attention du conducteur (106) par création d'une carte d'attention (212 ; 600) en utilisant une information de conducteur (108) qui représente une direction de regard et/ou une position de la tête du conducteur (106) acquise au moyen d'un capteur (104) du véhicule (100) et/ou une orientation d'un torse du conducteur (106), la carte d'attention (212 ; 600) représentant une distribution réelle de l'attention du conducteur (106) dépendant de la direction de regard et/ou de la position de la tête dans un système de coordonnées bidimensionnel (500), le système de coordonnées bidimensionnel (500) reproduisant au moins une zone partielle d'un environnement du véhicule (100) ;
la modélisation (315) d'un besoin d'attention par création d'une carte de besoin d'attention (214), la carte de besoin d'attention (214) représentant une distribution cible de l'attention du conducteur (106) dans le système de coordonnées bidimensionnel (500) ; et
la comparaison (320) de la carte d'attention (212 ; 600) à la carte de besoin d'attention (214) afin de déterminer une valeur de distraction (110) représentant la distraction visuelle du conducteur (106).

2. Procédé (300) selon la revendication 1, dans lequel, lors de l'étape de modélisation (310, 315), la carte d'attention (212 ; 600) et/ou la carte de besoin d'attention (214) est créée sur la base d'un système de coordonnées sphériques (500).

3. Procédé (300) selon la revendication 2, dans lequel, lors de l'étape de modélisation (310, 315), le système de coordonnées sphériques (500) présente une plage d'angles polaires comprise entre moins 180 degrés et plus 180 degrés et/ou une plage d'angles azimutaux comprise entre moins 60 degrés et plus 60 degrés.

4. Procédé (300) selon l'une des revendications précédentes, dans lequel, lors de l'étape de modélisation (310, 315), la carte d'attention (212 ; 600) et/ou la carte de besoin d'attention (214) est créée avec une origine de coordonnées (0) qui représente un centre d'une zone de maintien de la tête du conducteur (106) dans le véhicule (100).

5. Procédé (300) selon l'une des revendications précédentes, dans lequel, lors de l'étape de comparaison (320), une différence entre la carte d'attention (212 ; 600) et la carte de besoin d'attention (214) est créée pour déterminer, en tant que valeur de distraction (110), une valeur représentant un écart positif et/ou négatif de la distribution réelle par rapport à la distribution cible.

6. Procédé (300) selon l'une des revendications précédentes, dans lequel, lors de l'étape de modélisation (310), un angle d'excentricité concentrique à un axe de vision fovéal du conducteur (106) est déterminé en utilisant l'information de conducteur (108) et est utilisé pour modéliser une perception périphérique du conducteur (106), la carte d'attention (212 ; 600) étant créée en tenant compte de la perception périphérique modélisée.

7. Procédé (300) selon l'une des revendications précédentes, dans lequel, lors de l'étape de modélisation (310), l'information de conducteur (108) est pondérée en fonction du temps en utilisant une fonction de pondération (800), la carte d'attention (212 ; 600) étant créée en utilisant l'information de conducteur pondérée (108) .

8. Procédé (300) selon l'une des revendications précédentes, dans lequel, lors de l'étape de modélisation (310), l'information de conducteur (108) est utilisée pour détecter un regard fixe du conducteur (106), la carte d'attention (212 ; 600) étant créée en fonction de la détection du regard fixe du conducteur (106).

9. Procédé (300) selon l'une des revendications précédentes, dans lequel, lors de l'étape de modélisation (310), un regard de rétroviseur et/ou d'épaule du conducteur (106) est déterminé en utilisant l'information de conducteur (108), la carte d'attention (212 ; 600) étant créée en tenant compte du regard de rétroviseur et/ou d'épaule.

10. Procédé (300) selon l'une des revendications précédentes, dans lequel, lors de l'étape de modélisation (315), la carte de besoin d'attention (214) est créée en utilisant une information d'environnement fournie par un capteur d'environnement du véhicule (100) et/ou une information de guidage permettant de guider le véhicule (100) à l'aide d'une carte numérique.

11. Procédé (300) selon la revendication 10, dans lequel, lors de l'étape de modélisation (315), l'information d'environnement et/ou l'information de guidage représente un type de route et/ou un nombre de voies de circulation et/ou une position de voie de circulation et/ou une courbure de voie de circulation et/ou une information d'objet qui représente une position et/ou un type et/ou un changement d'état d'au moins un objet dans l'environnement du véhicule (100).

12. Dispositif (102) comprenant des unités (210, 220) qui sont configurées pour mettre en œuvre et/ou commander le procédé (300) selon l'une des revendications 1 à 11.

13. Programme informatique, qui est configuré pour mettre en œuvre et/ou commander le procédé (300) selon l'une des revendications 1 à 11.

14. Support de stockage lisible par machine, sur lequel est enregistré le programme informatique selon la revendication 13.

# Fig. 1

# Fig. 2

**Fig. 3**

300

310

315

320

**Fig. 4**

300

310

315

320

## Fig. 5

## Fig. 6

# Fig. 7

700

t

# Fig. 8

802

800

t

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1484014 A1
- WO 2011088344 A2
- EP 1961622 A1
- GB 2500690 A
- EP 2743117 A1